# EUROPÄISCHE PATENTSCHRIFT

(11) **EP 3 486 635 B1**
(45) Veröffentlichungstag und Bekanntmachung des Hinweises auf die Patenterteilung: **25.09.2024**
(21) Anmeldenummer: 17202034.9
(22) Anmeldetag: 16.11.2017
(51) Int. Cl.: G01N 17/00, G01F 1/69

(54) **SENSOREINRICHTUNG MIT EINEM LUFTMASSENSENSOR FÜR EINE BEWITTERUNGSVORRICHTUNG**
SENSOR UNIT COMPRISING AN AIR FLOW SENSOR FOR A WEATHERING DEVICE
DISPOSITIF CAPTEUR DOTÉ D'UN CAPTEUR DE DÉTECTION D'AIR POUR UN DISPOSITIF D'EXPOSITION AUX AGENTS ATMOSPHÉRIQUES

(43) Veröffentlichungstag der Anmeldung: 22.05.2019
(73) Patentinhaber: Atlas Material Testing Technology GmbH, 63589 Linsengericht/Altenhasslau (DE)
(72) Erfinder: RUDOLPH, Bernd, 63755 Alzenau (DE); MARCH, Peter, 65931 Frankfurt a. Main (DE)
(74) Vertreter: Lambsdorff & Lange Patentanwälte Partnerschaft mbB

(56) Entgegenhaltungen:
- EP-A1- 1 517 132
- EP-A1- 2 982 962
- EP-A2- 1 703 263
- JP-A- 2008 202 980
- JP-A- H06 323 983
- KR-A- 20160 035 886
- US-A1- 2009 031 820
- US-A1- 2014 208 755
- US-A1- 2015 068 328

## Beschreibung

### TECHNISCHES GEBIET

Die vorliegende Offenbarung bezieht sich auf eine Sensoreinrichtung für eine Vorrichtung zur Bewitterung oder Lichtechtheitsprüfung von Proben und auf eine Verwendung einer derartigen Sensoreinrichtung in einer Vorrichtung zur Bewitterung oder Lichtechtheitsprüfung von Proben.

### HINTERGRUND

In Vorrichtungen zur künstlichen Bewitterung wird eine Bewertung des witterungsbedingten Alterungsverhaltens einer Probe, insbesondere einer flächigen Werkstoffprobe, durchgeführt, wobei die Probe einer künstlichen Bewitterung ausgesetzt wird. Derartige Vorrichtungen weisen zu diesem Zweck üblicherweise eine Bewitterungskammer auf, in welcher Halterungsmittel für die Halterung von zu bewitternden Proben und eine Strahlungsquelle zur Beaufschlagung der Proben mit Strahlung, insbesondere mit UV-Strahlung, angeordnet sind.

In derartigen Vorrichtungen zur künstlichen Bewitterung oder Lichtechtheitsprüfung von Werkstoffproben soll zumeist die Lebensdauer von Werkstoffen abgeschätzt werden, die in ihrer Anwendung ständig den natürlichen Wetterverhältnissen ausgesetzt sind und sich somit unter klimatischen Einflüssen wie Sonnenlicht, Sonnenwärme, Feuchtigkeit und dergleichen verschlechtern. Um eine gute Simulation der natürlichen Witterungsgegebenheiten zu erhalten, ist es von Vorteil, wenn die spektrale Energieverteilung des in der Vorrichtung erzeugten Lichtes möglichst derjenigen der natürlichen Sonnenstrahlung entspricht, aus welchem Grund in solchen Geräten als Strahlungsquelle Xenon-Gasentladungslampen eingesetzt werden können. Zusätzlich wird eine zeitraffende Alterungsprüfung der Werkstoffe im Wesentlichen durch eine gegenüber den natürlichen Verhältnissen stark intensivierte Bestrahlung der Proben erzielt, wodurch die Alterung der Proben beschleunigt wird. Somit läßt sich nach verhältnismäßig kurzer Zeit eine Aussage über das Langzeit-Alterungsverhalten einer Werkstoffprobe machen.

Die Druckschrift US 2014/208755 A1 beschreibt ein Verfahren und ein System zur Messung eines Massenstroms in einem Teil eines Strömungswegs in einem Einlasskanal eines Gasturbinentriebwerks.

Die Druckschrift EP 1 703 263 A2 beschreibt eine Sensorvorrichtung, die an einem Ansaugrohr eines Kraftfahrzeugmotors angebracht wird, um den Durchsatz der Ansaugluft zu messen.

Die Druckschrift US 2015/068328 A1 beschreibt eine Vorrichtung zur künstlichen Bewitterung oder Lichtechtheitsprüfung von Proben mit einer Bewitterungskammer, in welcher mindestens eine Probe anordenbar ist.

Die Druckschrift EP 2 982 962 A1 beschreibt eine Sensoreinrichtung für eine Vorrichtung zur Bewitterung oder Lichtechtheitsprüfung von Proben umfassend ein Sensorgehäuse und mehrere Sensoren aus einer Gruppe enthaltend einen Schwarztafel- oder Schwarzstandardsensor, einen UV-Strahlungssensor und einen Luftfeuchtigkeitssensor, die an das Sensorgehäuse angebracht sind.

Die Druckschrift JP 2008 202980 A beschreibt eine Sensoreinrichtung für eine Vorrichtung zur künstlichen Bewitterung, wobei die Sensoreinrichtung ein Sensorgehäuse, einen Schwarztafel- oder Schwarzstandardsensor und einen Luftmassensensor aufweist, welche innerhalb des Sensorgehäuses angeordnet sind.

Es ist Aufgabe der vorliegenden Erfindung, eine verbesserte Sensoreinrichtung, insbesondere eine solche mit verbesserter Sensorik anzugeben. Diese Aufgabe wird durch die Merkmale des unabhängigen Patentanspruchs 1 gelöst. Vorteilhafte Weiterbildungen und Ausführungsformen sind in den Unteransprüchen angegeben.

### KURZFASSUNG

Nach einem ersten Aspekt der Offenbarung umfasst eine Sensoreinrichtung für eine Vorrichtung zur Bewitterung oder Lichtechtheitsprüfung von Proben die Merkmale des Patentanspruchs 1.

Ein zweiter Aspekt der Offenbarung bezieht sich auf eine Verwendung einer derartigen Sensoreinrichtung in einer Vorrichtung zur Bewitterung oder Lichtechtheitsprüfung von Proben.

Der Fachmann erkennt zusätzliche Merkmale und Vorteile beim Lesen der nachfolgenden ausführlichen Beschreibung und der beiliegenden Zeichnungen.

### KURZE BESCHREIBUNG DER ZEICHNUNGEN

Die beiliegenden Zeichnungen stellen Ausführungsbeispiele dar und dienen zusammen mit der Beschreibung zum Erläutern von Prinzipien der vorliegenden Offenbarung sowie Einzelheiten der Ausführungsbeispiele.

Figur 1 enthält die Figuren 1A und 1B und zeigt einen Querschnitt (A) und einen Längsschnitt (B) durch ein Ausführungsbeispiel einer Vorrichtung zur künstlichen Bewitterung oder Lichtechtheitsprüfung mit einer Anzahl zu bewitternder Proben und einer mitgeführten Sensoreinrichtung.

Figur 2 enthält Figuren 2A, 2B und 2C und zeigt einen Längsschnitt (A) und eine Draufsicht (B) auf eine Sensoreinrichtung gemäß eines Ausführungsbeispiels und eine vergrößerte Seitenansicht des Luftmassensensors (C), wobei eine metallische Schicht als Sensorelement verwendet wird.

Figur 3 enthält Figuren 3A, 3B und 3C und zeigt einen Längsschnitt (A) und eine Draufsicht (B) auf eine Sensoreinrichtung gemäß eines Ausführungsbeispiels und eine vergrößerte Seitenansicht des Luftmassensensors (C), wobei ein metallischer Draht als Sensorelement verwendet wird.

Fig. 4 zeigt ein Blockschaltbild eines elektrischen Schaltkreises einer Sensoreinrichtung gemäß eines Ausführungsbeispiels.

### DETAILLIERTE BESCHREIBUNG

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen der vorliegenden Erfindung in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Die folgende ausführliche Beschreibung ist deshalb nicht in einschränkendem Sinne aufzufassen und der Schutzumfang der vorliegenden Erfindung wird durch die angefügten Ansprüche definiert.

Insofern in der folgenden Beschreibung, den Patentansprüchen oder den Zeichnungen zum Ausdruck gebracht wird, dass Elemente wie mechanische Elemente oder Schaltungselemente miteinander "verbunden", "elektrisch verbunden" oder "elektrisch gekoppelt" sind, so kann dies bedeuten, dass die genannten Elemente direkt, d.h. ohne dazwischen befindliche weitere Elemente miteinander gekoppelt sind. Es kann jedoch auch bedeuten, dass die genannten Elemente nicht direkt miteinander gekoppelt sind und dass weitere Elemente zwischen die genannten Elemente gekoppelt sind. Insofern in den Figuren gleiche Bezugszeichen verwendet werden, so beziehen sich diese auf gleiche oder funktionsgleiche Elemente, so dass in diesen Fällen die Beschreibung dieser Elemente nicht wiederholt wird.

Ein Großteil der in Bewitterungsgeräten untersuchten Werkstoffproben besteht aus polymeren Werkstoffen. Bei diesen wird die witterungsbedingte Verschlechterung im Wesentlichen durch den UV-Anteil der Sonnenstrahlung hervorgerufen. Die dabei ablaufenden fotochemischen Primärprozesse, also die Absorption von Photonen und die Erzeugung angeregter Zustände oder freier Radikale, sind temperaturunabhängig. Dagegen können die nachfolgenden Reaktionsschritte mit den Polymeren oder Additiven temperaturabhängig sein, so dass die beobachtete Alterung der Werkstoffe ebenfalls temperaturabhängig ist. Der Grad der Temperaturabhängigkeit ist von dem zu untersuchenden Werkstoff und der betrachteten Eigenschaftsänderung abhängig.

Um dieser Tatsache Rechnung zu tragen, kann bei der künstlichen Bewitterung von polymeren Werkstoffen die Raumtemperatur und/oder die Probentemperatur konstant gehalten werden. Die Konstanthaltung und die Kenntnis der Temperaturen sind wegen der Temperaturabhängigkeit der Alterung von Bedeutung, um die Resultate verschiedener Bewitterungsläufe untereinander vergleichen zu können.

Da es problematisch ist, die Probentemperatur der zu untersuchenden Werkstoffproben direkt zu messen, werden in einem erfindungsgemäßen Bewitterungsprüfgerät ein oder mehrere Temperatursensoren eingesetzt, deren gemessene Temperatur als ein Maß für die Probentemperatur verwendet werden kann. Als derartige Temperatursensoren wird mindestens ein Schwarztafelsensor oder Schwarzstandardsensor eingesetzt, und optional können Weißstandardsensoren eingesetzt werden. Wenn im Folgenden nur noch von Schwarzstandardsensoren die Rede sein wird, so sollen damit alle diese genannten Sensoren umfasst sein, wobei aber mindestens ein Schwarztafelsensor oder ein Schwarzstandardsensor nicht optional sind. Ein Bewitterungsprüfgerät kann beispielsweise eine Bewitterungskammer aufweisen, in welcher eine Xenon-Strahlungsquelle als Lichtquelle zur Abgabe von Licht mit einer vorbestimmten Intensität vorgesehen sein kann. Innerhalb der Bewitterungskammer kann sich ein zylindersymmetrischer Probenhalterrahmen befinden, der um die Strahlungsquelle drehbar gehaltert ist. Von diesem Probenhalterrahmen können sowohl zu untersuchende Werkstoffproben als auch Sensoreinrichtungen mit Schwarzstandardsensoren getragen werden, so dass die Werkstoffproben und die Schwarzstandardsensoren unter gleichen Bedingungen dem Strahlungsfeld der Lichtquelle und den übrigen, innerhalb der Bewitterungskammer eingestellten Bedingungen ausgesetzt sind. Um die Probentemperatur innerhalb bestimmter Grenzen steuern zu können und um sie innerhalb der Bewitterungskammer zu vergleichmäßigen, kann zusätzlich ein Luftstrom in die Bewitterungskammer eingeleitet werden, der zylindersymmetrisch bezüglich der Strahlungsquelle an dem Probenhalterrahmen und den darin gehalterten Werkstoffproben und dem Schwarzstandardsensor vorbeistreicht. Der Luftstrom kann dabei einen Teil der Wärme der Werkstoffproben und des Schwarzstandardsensors abführen. Dies kann beispielsweise für eine Temperaturregelung ausgenutzt werden, indem die von dem Schwarzstandardsensor gemessene Temperatur als ein Regelsignal für die Stärke des in die Bewitterungskammer eingeleiteten Luftstroms verwendet wird.

Der vorliegenden Offenbarung liegt die Erkenntnis zugrunde, dass es von Vorteil sein kann, den bei einem Testlauf auftretenden Luftmassenstrom und optional die Strömungsgeschwindigkeit des Luftmassenstroms zu messen. Dies eröffnet zum einen die Möglichkeit einer besseren Vergleichbarkeit von Prüfergebnissen und kann des Weiteren dazu genutzt werden, den in eine Bewitterungskammer eingeleiteten Luftstrom auf definierte Werte einzustellen.

Eine Sensoreinrichtung gemäß dem ersten Aspekt weist ein Sensorgehäuse auf, welches einen Luftmassensensor aufweist und in einer Bewitterungskammer der Vorrichtung auf dieselbe Weise wie eine Probe anordenbar ist. Die Proben können in der Bewitterungskammer je nach Typ der Bewitterungsvorrichtung entweder an einem drehbaren Halterungsrahmen befestigt werden oder in geeigneter Weise stationär gehaltert werden. Idealerweise sind daher sowohl die Form als auch die Abmessungen des Sensorgehäuses im Wesentlichen gleich der Form und den Abmessungen der üblicherweise verwendeten Proben oder Probenhalter, so dass das Sensorgehäuse anstelle einer Probe oder einem Probenhalter an einen drehbaren Halterungsrahmen oder stationär in der Bewitterungskammer gehaltert werden kann. Das Sensorgehäuse kann insbesondere eine quaderförmige Grundform aufweisen. Im Allgemeinen sind in Bewitterungskammern aller Art entsprechend ausgebildete Aufnahmeelemente oder Aufnahmeeinrichtungen angeordnet, in oder an welchen die zu bewitternden Proben aufgenommen und geeignet befestigt werden können. Es kann demnach vorgesehen sein, dass die Sensoreinrichtung an eben denselben Aufnahmeelementen oder Aufnahmeeinrichtungen gehaltert und befestigt werden kann, ohne dass zusätzliche Maßnahmen ergriffen müssen.

Der Luftmassensensor weist ein Sensorelement auf und ist an dem Sensorgehäuse derart befestigt, dass das Sensorelement auf dieselbe Weise wie eine Probe einem in der Bewitterungskammer vorherrschenden Luftstrom ausgesetzt ist.

Gemäß einem Ausführungsbeispiel der Sensoreinrichtung ist der Luftmassensensor nach dem Prinzip eines Heizdrahtsensors ausgelegt und das Sensorelement ist durch eine stromdurchflossene metallische Lage oder Schicht gegeben. Eine derartige metallische Schicht kann beispielsweise aus Platin, Nickel oder Wolfram oder Legierungen aus diesen und gegebenenfalls weiteren Metallen bestehen, wobei die metallische Schicht auf einem Substrat, insbesondere einem Keramik-Substrat aufgebracht ist. Im Falle von Platin als metallische Schicht kann insbesondere Pt1000, also eine Platinschicht mit einem Nennwiderstand von R₀ = 1 kΩ, eingesetzt werden, wie sie beispielsweise auch für handelsübliche Temperatursensoren verwendet wird.

Gemäß einem weiteren Ausführungsbeispiel weist das Substrat die Form einer Säule oder eines Ständers auf, welcher senkrecht von einer Hauptoberfläche des Sensorgehäuses empor ragt, so dass eine auf einer von der Hauptoberfläche des Sensorgehäuses abgewandten Oberfläche des Substrats aufgebrachte metallische Schicht in gleicher Weise wie die Probe dem Luftstrom ausgesetzt ist. Gemäß einer weiteren Ausführungsform davon können die Dimensionen des Substrats, also insbesondere die Länge der Säule, derart bemessen sein, dass eine Oberfläche der metallischen Schicht im Wesentlichen in ein und derselben Ebene wie eine Oberfläche der Probe zu liegen kommt.

Gemäß einem anderen Ausführungsbeispiel einer Sensoreinrichtung kann der Luftmassensensor als ein Hitzdrahtsensor ausgelegt sein und das Sensorelement kann durch einen metallischen Draht gegeben sein, welcher aus Platin, Nickel oder Wolfram oder Legierungen aus diesen und gegebenenfalls anderen Metallen bestehen kann. Auch in diesem Fall kann der Hitzdraht auf einer in senkrechter Richtung von einer Hauptoberfläche des Sensorgehäuses weg ragenden Säule derart angeordnet werden, dass er im Wesentlichen in einer Ebene mit einer Oberfläche der Probe zu liegen kommt.

Wie bereits angedeutet, ist vorzugsweise vorgesehen, dass das Sensorelement im Wesentlichen in derselben Ebene wie die Probe zu liegen kommt. Falls der Luftmassensensor nach dem Prinzip eines Hitzdrahtsensors ausgelegt ist, kann somit der metallische Draht oder die metallische Schicht im Wesentlichen in derselben Ebene wie die Oberfläche der Probe liegen.

Gemäß der Erfindung der Sensoreinrichtung ist am Sensorgehäuse mindestens ein Schwarztafel- oder Schwarzstandardsensor angebracht, und optional ist in oder an dem Sensorgehäuse mindestens ein weiterer Sensor angebracht, wobei ein oder mehrere weitere Sensoren einer Gruppe enthaltend einen Schwarztafel- oder Schwarzstandardsensor, einen UV-Strahlungssensor, einen Lufttemperatursensor, und einen Luftfeuchtigkeitssensor zugehörig sein können.

Gemäß einem Ausführungsbeispiel der Sensoreinrichtung ist der Luftmassensensor an einer äußeren Wand des Sensorgehäuses befestigt, wobei die äußere Wand durch eine von einer ersten Außenwand des Sensorgehäuses beabstandete Platte gebildet sein kann. Das Sensorgehäuse kann eine quaderförmige Grundform aufweisen, wobei die Platte rechteckförmig gebildet sein kann und im Wesentlichen gleiche Abmessungen wie die erste Außenwand aufweisen kann. Sie kann an ihren vier Ecken mittels vier Schrauben an die erste Außenwand befestigt sein, wobei die Schrauben innerhalb von Abstandshülsen geführt werden, die sich zwischen der Platte und der ersten Außenwand befinden und für den gewünschten Abstand zwischen Platte und erster Außenwand sorgen.

Gemäß einem weiteren Ausführungsbeispiel der Sensoreinrichtung kann ein Schwarztafel- oder Schwarzstandardsensor an einer äußeren Wand des Sensorgehäuses befestigt sein, insbesondere an der, wie vorstehend beschrieben, von der ersten Außenwand des Sensorgehäuses beabstandeten Platte.

Gemäß einem Ausführungsbeispiel der Sensoreinrichtung ist innerhalb des Sensorgehäuses eine elektrische Leistungsversorgung wie eine Batterie oder ein Akkumulator angeordnet. Diese ist mit einer Schaltung verbunden und kann sowohl Bauelemente der Schaltung als auch den Luftmassensensor und die gegebenenfalls weiteren vorhandenen Sensoren mit der notwendigen elektrischen Leistung versorgen.

Gemäß einem Ausführungsbeispiel der Sensoreinrichtung ist diese für eine Übermittlung der Ausgangssignale des Luftmassensensors an eine zentrale Steuereinheit ausgebildet. In der zentralen Steuereinheit können die Ausgangssignale des Luftmassensensors gespeichert und ausgewertet werden und gegebenenfalls auch für die Steuerung von Testläufen genutzt werden, insbesondere für die Steuerung der Zufuhr des Luftmassenstroms.

Gemäß einem Ausführungsbeispiel der Sensoreinrichtung ist innerhalb des Sensorgehäuses eine Schaltungsplatine angeordnet, auf welcher eine Steuereinheit angeordnet sein kann, welcher Ausgangssignale des Luftmassensensors und etwaigen weiteren Sensoren zuführbar sind. Es kann ferner vorgesehen sein, dass auf der Schaltungsplatine eine Speichereinheit angeordnet ist, auf welcher Daten der Ausgangssignale des Luftmassensensors und gegebenenfalls weiterer Sensoren speicherbar sind.

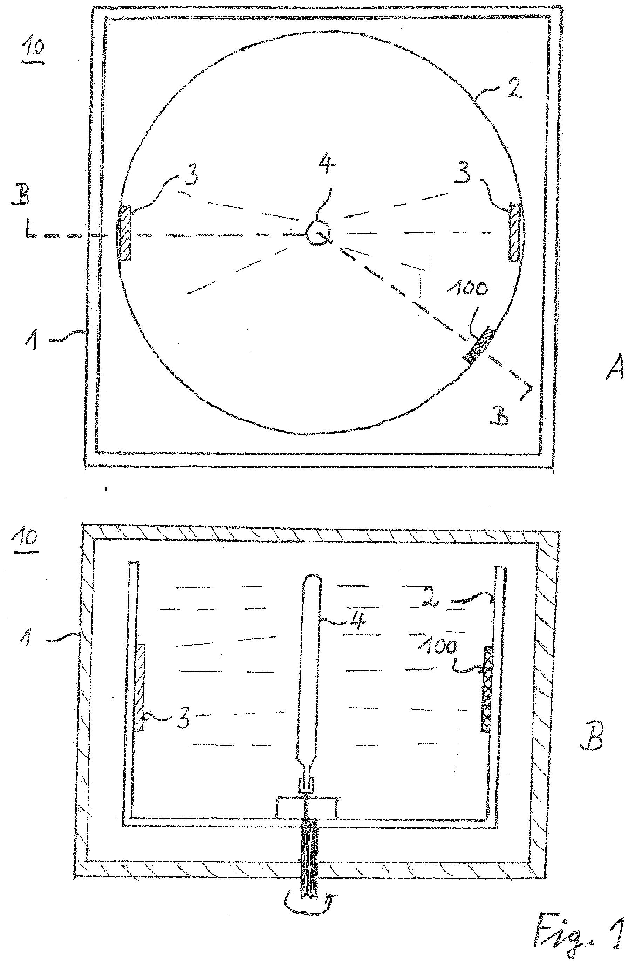

In den Figur 1, welche die Figuren 1A und 1B enthält, ist eine Ausführungsform einer Vorrichtung zur künstlichen Bewitterung oder Lichtechtheitsprüfung von Proben in einem Querschnitt (A) und einem Längsschnitt (B) entlang der in Fig. 1A eingezeichneten gestrichelten Linie B-B jeweils schematisch dargestellt. Die Vorrichtung 10 umfasst eine Bewitterungskammer 1, innerhalb der eine künstliche Bewitterung oder Lichtechtheitsprüfung von Proben durchgeführt werden kann. In der Bewitterungskammer 1 ist ein ringförmig geschlossener Halterungsrahmen 2 drehbar gelagert, welcher auf seiner Innenseite geeignet geformte Halterungselemente (nicht gezeigt) aufweist, mittels derer Proben 3 oder Werkstücke, beispielsweise rechteckige Lackproben genormter Größe, gehaltert werden können. Der Halterungsrahmen 2 ist insbesondere in einem seitlichen Querschnitt kreisförmig, so dass die Proben 3 bei Drehung des Halterungsrahmens 2 auf einer geschlossenen Kreisbahn geführt werden. Innerhalb des Halterungsrahmens 2 und im Wesentlichen konzentrisch mit diesem ist eine Strahlungsquelle 4 angeordnet, welche beispielsweise durch eine Xenon-Gasentladungslampe gebildet sein kann. Es kann vorgesehen sein, dass eine Mehrzahl von Proben 3 an dem Halterungsrahmen 2, insbesondere an dafür vorgesehenen, in Umfangsrichtung des Halterungsrahmens 2 angeordneten Halterungselementen befestigt werden können. Es können darüber hinaus die Proben 3 auch in mehreren Ebenen übereinander am Halterungsrahmen 2 befestigt werden.

In der Bewitterungskammer 1 ist des Weiteren eine Sensoreinrichtung 100 angeordnet, welche einen Luftmassensensor enthält. Die Sensoreinrichtung 100 kann, wie die Proben 3, an den Halterungsrahmen 2 befestigt sein und mit diesen um die aus der Strahlungsquelle 4 bestehende Anordnung umlaufen, also als mitlaufende Sensoreinrichtung 100 ausgebildet sein. Die Ausgangssignale der Sensoreinrichtung 100 bzw. des in ihr enthaltenen Luftmassensensors können einer externen zentralen Steuereinrichtung zugeführt werden. Insbesondere kann die Sensoreinrichtung 100 so ausgebildet sein, dass die von ihr detektierten Parameter als entsprechende elektrische Messsignale ausgegeben und der externen zentralen Steuereinrichtung zugeführt werden. Die Sensoreinrichtung 100 kann, wie dargestellt, in Bezug auf die Proben 3 in Umfangsrichtung der Halterungseinrichtung 2 versetzt angeordnet sein. Sie könnte ebenso gut auch ohne Umfangsversetzung in Höhenrichtung in Bezug auf die Proben 3 oder sowohl in Höhenals auch in Umfangsrichtung mit Bezug auf die Proben 3 versetzt angeordnet sein.

Es ist vorgesehen, dass aus den weiter oben genannten Gründen ein Luftstrom in die Bewitterungskammer 1 eingeleitet wird, der in vertikaler Richtung an den Proben 3 und an der Strahlungsquelle 4 vorbeistreicht. Die Strömungsgeschwindigkeit dieses Luftstroms soll von dem Luftmassensensor gemessen werden.

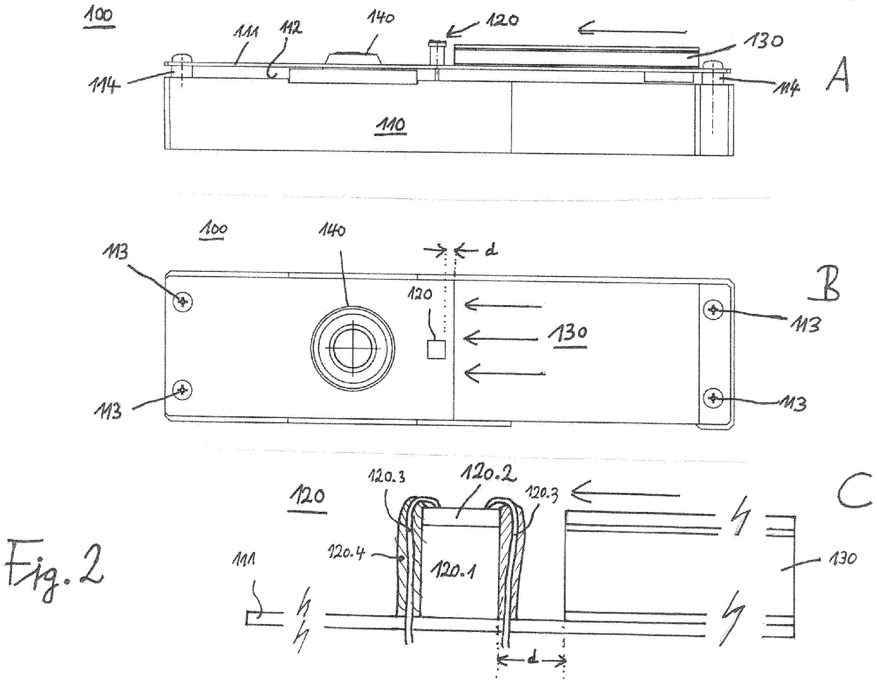

In der Figur 2, welche die Figuren 2A, 2B und 2C enthält ist eine Sensoreinrichtung gemäß dem ersten Aspekt in einem Längsschnitt (A) und in einer Draufsicht (B) und ein Luftmassensensor in einer vergrößerten Seitenansicht (C) dargestellt. Der Luftstrom strömt in einer vertikalen Richtung durch die Bewitterungskammer, also in einer Richtung wie sie durch die Pfeile in den Figuren 2A bis 2C angedeutet ist.

Die Sensoreinrichtung 100 enthält ein Sensorgehäuse 110 aus Edelstahl, welches eine im Wesentlichen quaderförmige Grundform aufweist. Vor eine erste Außenwand 112 des Sensorgehäuses 110 ist eine Platte 111 in einem Abstand von der ersten Außenwand 112 an diese befestigt. Die Befestigung kann, wie dargestellt, durch im Bereich der vier Ecken der Platte 111 angeordnete Schrauben 113 erfolgen, die durch Abstandshülsen 114 zwischen der Platte 111 und der ersten Außenwand 112 geführt sind und in entsprechende Bohrungen im Bereich der vier Ecken der ersten Außenwand 112 geschraubt sind. An der Platte 111 ist ein Schwarzstandardsensor 130 befestigt, welcher im laufenden Betrieb einer Bewitterungsvorrichtung 10 der Strahlungsquelle 4 der Bewitterungsvorrichtung 10 zugewandt ist.

Der Schwarzstandardsensor 130 kann so aufgebaut sein, dass er eine Edelstahlplatte mit einer im Betrieb der Strahlungsquelle 4 zugewandten schwarz lackierten Oberfläche und ein an die Edelstahlplatte auf deren Rückseite thermisch angekoppeltes temperaturabhängiges elektrisches Bauelement aufweist. Das elektrische Bauelement kann durch einen temperaturabhängigen Widerstand wie einen Platinwiderstand (handelsübliche Bezeichnungen Pt100 oder Pt1000) gebildet sein und mit einer elektrischen Messumformerschaltung verbunden sein. Insbesondere kann auf der Rückseite der Edelstahlplatte eine den Platinwiderstand umschließende Kunststoffplatte aus PVDF (Polyvinylidenfluorid) und eine Abschlussplatte aus Edelstahl aufgebracht sein. Ein Schwarztafelsensor besteht im Unterschied zu dem Schwarzstandardsensor aus einer beidseitig geschwärzten Metallplatte ohne PVDF-Isolierung, wobei der temperaturabhängige Widerstand ohne umgebende Isolierung auf die Rückseite der Edelstahlplatte aufgebracht ist. Derartige Schwarzstandard- oder Schwarztafelsensoren können in Bewitterungsgeräten eingesetzt werden, um für jeden Bewitterungsprozess eine Schwarzstandardtemperatur angeben zu können. Die Schwarzstandardtemperatur stellt eine obere Grenze für den in Frage kommenden Bereich der Oberflächentemperatur der Werkstoffprobe dar. Zusätzlich kann ein Weißstandardsensor eingesetzt werden, dessen Temperaturmessung eine untere Grenze dieses Bereichs bereitstellt. Somit kann die Probentemperatur eingegrenzt werden und es kann gegebenenfalls als erste Näherung für die Probentemperatur der arithmetische Mittelwert der gemessenen Temperaturen angenommen werden.

In unmittelbarer Nähe des Schwarzstandardsensors 130 ist ein Luftmassensensor 120 auf der Platte 111 befestigt. Der Luftmassensensor 120 kann einen säulenförmigen Schaft 120.1 mit quadratischem (oder kreisrundem) Querschnitt aufweisen, auf dessen oberer Oberfläche eine metallische Schicht 120.2 aufgebracht ist, welche als das eigentliche Sensorelement dient. Der Luftmassensensor 120 arbeitet nach dem Prinzip des Hitzdrahtsensors. Gemäß diesem Prinzip wird die metallische Schicht 120.2 von einem Strom durchflossen und solchermaßen widerstandsbeheizt. Durch die Umströmung infolge des durch die Pfeile angedeuteten Luftstroms wird der metallischen Schicht 120.2 Wärme entzogen, was zu einer Änderung des Widerstands führt. Es kann nun entweder der Sensor mit einem konstanten Strom beheizt und die sich ändernde, am Sensor abfallende Spannung gemessen werden (CCA, Constant-Current Anemometry), oder es kann durch einen Regelkreis der Sensor auf einer im Mittel konstanten Temperatur gehalten werden (CTA, Constant-Temperature Anemometry). In jedem Fall kann mittels des Zusammenhangs zwischen der Temperatur und dem Widerstand die Strömungsgeschwindigkeit des Luftstroms gemessen werden. Die Dicke der metallischen Schicht 120.2 kann in einem Bereich zwischen 0,5 µm und 500 µm, insbesondere in einem Bereich zwischen 1 µm und 200 µm, insbesondere in einem Bereich zwischen 10 µm und 100 µm liegen.

Das Substrat 120.1 kann beispielsweise ein Keramik-Substrat sein. Ein Abstand d zwischen einer dem Schwarzstandardsensor 130 zugewandten Außenwand des Substrats 120.1 und der dem Substrat 120.1 zugewandten Außenwand des Schwarzstandardsensors 130 liegt in einem Bereich zwischen 0,5 mm und 10 mm. Durch diesen geringen Abstand kann sichergestellt werden, dass bei dem Luftmassensensor 120 im Wesentlichen dieselben Strömungsverhältnisse wie bei dem Schwarzstandardsensor 130 und somit auch bei den lateral neben dem Schwarzstandardsensor 130 angeordneten Proben gegeben sind.

Die elektrische Kontaktierung des Sensorelements 120.2 kann wie dargestellt derart ausgestaltet sein, dass elektrische Anschlussdrähte 120.3 an der metallischen Schicht 120.2 angeschweißt sind und auf ihrer übrigen Länge in Glas 120.4 eingeschmolzen sind. Die Anschlussdrähte 120.3 werden an der Außenwand des Substrats 120.1 nach unten durch die Platte 111 geführt und mit der Schaltungsplatine verbunden, wo die Ausgangssignale des Luftmassensensors 120 einer Einheit, wie der Steuereinheit 270, zugeführt werden.

Die Sensoreinrichtung 100 kann des Weiteren einen UV-Strahlungssensor 140 aufweisen, welcher im Betrieb der Bewitterungsvorrichtung 10 ebenfalls der Strahlungsquelle 4 zugewandt ist. Der UV-Strahlungssensor 140 ist an der Platte 111 befestigt und weist eine sich nach oben verjüngende, kegelstumpfförmige Erhebung auf, die an ihrem oberen abgeflachten Ende eine Eintrittsöffnung für die Strahlung aufweist. In der Platte 111 ist eine Öffnung geformt, durch die die Strahlung auf ein unter der Platte 111 angeordnetes UV-Sensorelement auftreffen kann.

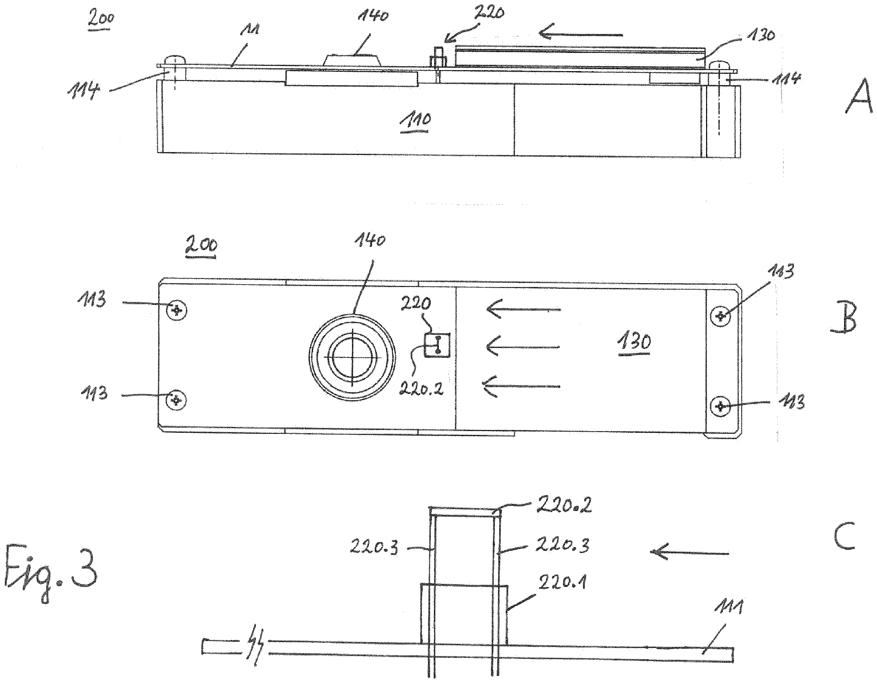

Fig. 3 weist die Figuren 3A bis 3C auf und zeigt einen Längsschnitt (A) einer und eine Draufsicht (B) auf eine Sensoreinrichtung gemäß einem Ausführungsbeispiel und eine vergrößerte Seitenansicht eines einen Hitzdraht aufweisenden Luftmassensensors (C).

Die Sensoreinrichtung 200 gemäß Fig. 3 unterscheidet sich von der Sensoreinrichtung 100 gemäß Fig. 2 lediglich in der Art des Luftmassensensors. Alle weiteren Details der Sensoreinrichtung 200 entsprechen jenen der Sensoreinrichtung 100 der Fig. 2, wobei dementsprechend die gleichen Bezugszeichen verwendet wurden.

Die Sensoreinrichtung 200 der Fig. 3 weist einen Luftmassensensor 220 auf, welcher ein Sensorelement 220.2 in Form eines Hitzdrahts enthält. Der Hitzdraht kann einen Durchmesser in einem Bereich zwischen 2,0 µm und 10 µm aufweisen und zwischen zwei wesentlich dickere Stahlspitzen 220.3 gespannt sein, an die er angeschweißt ist. Die Stahlspitzen 220.3 sind durch ein Substrat 220.1 geführt, welches als ein Keramik-Substrat gebildet sein kann und für die mechanische Stabilität und die elektrische Isolierung sorgt. Die Stahlspitzen 220.3 ragen ausgehend von einer oberen Oberfläche des Substrats 220.1 senkrecht nach oben. Die Stahlspitzen 220.3 können an ihrem unteren Ende mit Anschlussdrähten verbunden sein, die in ähnlicher Weise wie bei dem Luftmassensensor 120 der Fig. 1 an dem Substrat 220.1 entlang nach unten geführt werden können.

Von dem Hitzdraht 220.2 wird die Geschwindigkeitskomponente des Luftstroms in einer Ebene senkrecht zum Draht erfaßt. Da der Luftstrom in einer vertikalen Richtung durch die Bewitterungskammer strömt, also in einer Richtung wie sie durch die Pfeile in den Figuren 3A bis 3C angedeutet ist, wird der Luftmassensensor 220 zweckmäßigerweise so angeordnet, dass der Hitzdraht 220.2 senkrecht zu dem Luftstrom ausgerichtet ist, wie es aus der Fig. 3B ersichtlich ist.

Die vorliegende Offenbarung bezieht sich gemäß ihrem zweiten Aspekt ebenfalls auf eine Vorrichtung zur Bewitterung oder Lichtechtheitsprüfung von Proben, welche eine Bewitterungskammer 1 und einen in der Bewitterungskammer 1 angeordneten Luftmassensensor 120 oder 220 aufweist. Der Luftmassensensor 120 oder 220 weist ein Sensorelement 121 oder 221 auf, welches auf dieselbe Weise wie eine Probe 3 einem in der Bewitterungskammer 1 vorherrschenden Luftstrom ausgesetzt ist. Der Luftmassensensor 120 oder 220 kann Teil einer Sensoreinrichtung 100 oder 200 gemäß dem ersten Aspekt sein.

Die vorliegende Offenbarung bezieht sich ebenfalls gemäß ihrem dritten Aspekt auf ein Verfahren zur künstlichen Bewitterung oder Lichtechtheitsprüfung von Proben, bei welchem eine Anzahl Proben in einer Bewitterungskammer angeordnet wird und während eines Testlaufs einer künstlichen Bewitterung ein Luftstrom in die Bewitterungskammer eingeleitet wird und mittels eines Luftmassensensors die Strömungsgeschwindigkeit des Luftstroms gemessen wird.

Gemäß einer Ausführungsform des Verfahrens sind die Proben durch pastöse Stoffe gebildet.

Gemäß einer Ausführungsform des Verfahrens werden die Ausgangssignale des Luftmassensensors für die Steuerung der Luftmassenzufuhr zu der Bewitterungskammer verwendet.

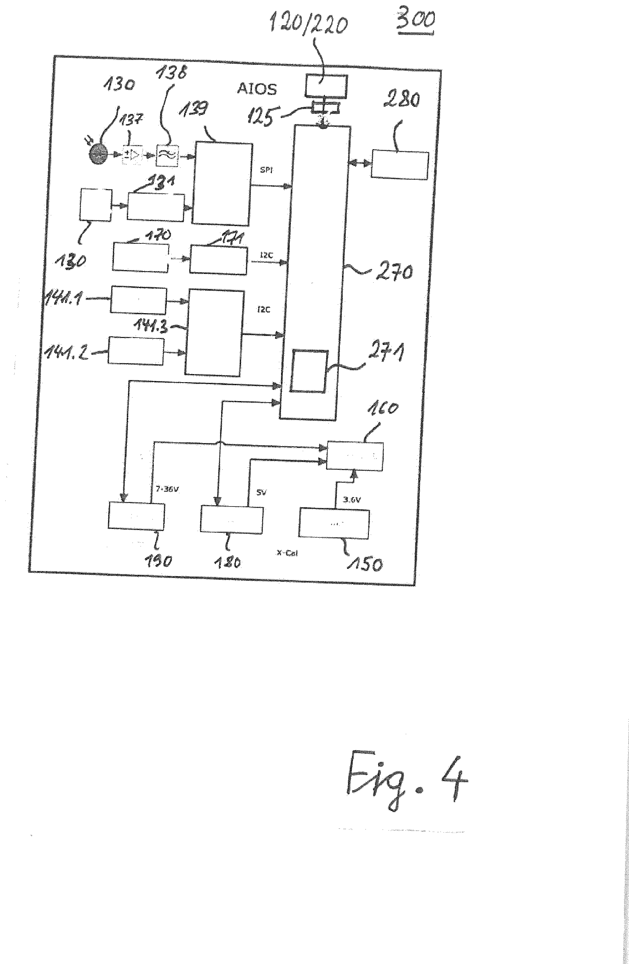

In der Fig. 4 ist ein Blockschaltbild eines elektrischen Schaltkreises einer Sensoreinrichtung dargestellt. Der dargestellte Schaltkreis 300 enthält außer dem Luftmassensensor 120/220 weitere Sensoren, die weiter unten beschrieben werden, sowie elektrische Bauelemente, die auf der genannten Schaltungsplatine aufgebracht sein können. Der Schaltkreis 300 weist eine Steuereinheit 270 auf, welchem Ausgangssignale des Luftmassensensors 120/220 und der weiteren Sensoren zuführbar sind. Die Steuereinheit 270 kann durch einen Mikroprozessor oder Mikrocontroller an sich bekannter Bauart gebildet sein.

Der Luftmassensensor 120/220 ist ausgangsseitig mit einem auf der Schaltungsplatine angeordneten Regelkreis 125 verbunden, durch den der Luftmassensensor 120/220 in geeigneter Weise angesteuert wird. Die von dem Luftmassensensor 120/220 gelieferten die Strömungsgeschwindigkeit repräsentierenden Ausgangssignale können dann von einem in dem Regelkreis 125 enthaltenen A/D-Wandler in digitale Ausgangssignale gewandelt und in dieser Form an die Steuereinrichtung 270 geliefert werden.

Mit der Steuereinheit 270 kann des Weiteren eine erste Speichereinheit 280 bidirektional verbunden sein, auf welcher Daten gespeichert sein können, welche für den UV-Strahlungssensor 140 spezifisch sind. Die erste Speichereinheit 280 kann durch einen DRAM-Speicher, insbesondere einen ferroelektrischen DRAM-Speicher (FRAM) gebildet sein. Die Steuereinheit 270 kann des Weiteren eine zweite Speichereinheit 271 aufweisen, auf welcher Daten gespeichert sein können, welche für eine Strahlungsquelle der Bewitterungsvorrichtung spezifisch sind. Der UV-Strahlungssensor 140 kann ausgangsseitig mit einem Verstärker 137 und einem Tiefpassfilter 138 verbunden sein kann, dessen Ausgang mit einem A/D-Wandler 139 verbunden sein kann. Der Schwarzstandardsensor 130 kann ausgangsseitig mit einer Signalaufbereitungsschaltung 131 verbunden sein, deren Ausgang mit einem A/D-Wandler 139 verbunden sein kann. Der A/D-Wandler 139 kann wiederum ausgangsseitig mit der Steuereinheit 270 verbunden sein. Ein Lufttemperatursensor 141.1 und ein Luftfeuchtigkeitssensor 141.2 können jeweils ausgangsseitig mit einem Datenprozessor 141.3 verbunden sein, dessen Ausgang mit der Steuereinheit 270 verbunden sein kann. Ein weiterer Temperatursensor 170 kann auf der Schaltungsplatine angeordnet und ausgangsseitig mit einer Signalaufbereitungs-Schaltung 171 verbunden sein, welche ihrerseits ausgangsseitig mit der Steuereinheit 270 verbunden sein kann. In dem Schaltkreis 200 kann ferner eine Batterie 150, eine mit der Batterie 150 verbundene Leistungsversorgungs-/Leistungssteuerungs-Schaltung 160, ein mit der Schaltung 160 verbundenes USB-Interface 180 und ein mit der Schaltung 160 verbundenes 485/422-Interface 190 enthalten sein.

Obwohl spezifische Ausführungsformen in dieser Beschreibung dargestellt und beschrieben wurden, ist für den Fachmann auf dem Gebiet zu erkennen, dass die gezeigten und beschriebenen spezifischen Ausführungsformen gegen eine Vielfalt von alternativen Implementierungen ausgetauscht werden können, ohne vom Schutzbereich der vorliegenden Erfindung abzuweichen. Diese Anmeldung soll jegliche Anpassungen oder Veränderungen der hierin erörterten spezifischen Ausführungsformen abdecken. Daher ist vorgesehen, dass diese Erfindung nur durch die Ansprüche begrenzt ist.

## Patentansprüche

1. Sensoreinrichtung (100; 200) für eine Vorrichtung (10) zur Bewitterung oder Lichtechtheitsprüfung von Proben, umfassend:
- ein Sensorgehäuse (110) und
- einen Schwarztafel- oder Schwarzstandardsensor (130), welcher an dem Sensorgehäuse (110) angebracht ist,
**dadurch gekennzeichnet, dass**
- die Sensoreinrichtung einen Luftmassensensor (120; 220) umfasst, welcher ein Sensorelement (120.2; 220.2) aufweist und an dem Sensorgehäuse (110) befestigt ist,
und dadurch dass
- der Luftmassensensor (120; 220) von dem Schwarztafel- oder Schwarzstandardsensor in einem Bereich zwischen 0,5 mm und 10 mm beabstandet ist.

2. Sensoreinrichtung (200) nach Anspruch 1, bei welcher
der Luftmassensensor (220) als ein Hitzdrahtsensor ausgelegt ist und das Sensorelement (220.2) durch einen Draht gegeben ist.

3. Sensoreinrichtung (100) nach Anspruch 1 oder 2, bei welcher
der Luftmassensensor (120) nach dem Prinzip eines Hitzdrahtsensors ausgelegt ist und das Sensorelement (120.2) durch eine metallische Lage oder Schicht gegeben ist.

4. Sensoreinrichtung (100) nach Anspruch 3, bei welcher
eine metallische Schicht aus Platin, Nickel oder Wolfram verwendet wird, welche auf einem Substrat (120.1) aufgebracht ist.

5. Sensoreinrichtung (100; 200) nach einem der vorhergehenden Ansprüche, bei welcher
der Luftmassensensor (120; 220) an einer äußeren Wand (111) des Sensorgehäuses (110) derart befestigt ist, dass das Sensorelement (120.2; 220.2) von der äußeren Wand (111) abgewandt ist.

6. Sensoreinrichtung (100; 200) nach Anspruch 5, bei welcher
die äußere Wand (111) durch eine von einer ersten Außenwand (112) des Sensorgehäuses (110) beabstandete Platte (111) gebildet ist.

7. Sensoreinrichtung (100; 200) nach Anspruch 5 oder 6, bei welcher
der Schwarztafel- oder Schwarzstandardsensor (130) an der äußeren Wand (111) des Sensorgehäuses (110) befestigt oder befestigbar ist.

8. Verwendung einer Sensoreinrichtung (100; 200) nach einem der vorherigen Ansprüche in einer Vorrichtung (10) zur Bewitterung oder Lichtechtheitsprüfung von Proben.

## Claims

1. A sensor device (100; 200) for a device (10) for weathering or lightfastness testing of samples, comprising
- a sensor housing (110),
and
- a black panel or black standard sensor (130) attached to the sensor housing (110),
**characterised in that**
- the sensor device comprises an air mass sensor (120; 220) which has a sensor element (120.2; 220.2) and is attached to the sensor housing (110),
and **in that**
- the air mass sensor (120; 220) is spaced from the black panel or black standard sensor in a range between 0.5 mm and 10 mm.

2. Sensor device (200) according to claim 1, in which
the air mass sensor (220) is designed as a hot-wire sensor and the sensor element (220.2) is provided by a wire.

3. Sensor device (100) according to claim 1 or 2, in which
the air mass sensor (120) is designed according to the principle of a hot-wire sensor and the sensor element (120.2) is provided by a metallic layer or coating.

4. Sensor device (100) according to claim 3, in which
a metallic layer of platinum, nickel or tungsten is used, which is applied to a substrate (120.1).

5. Sensor device (100; 200) according to one of the preceding claims, in which
the air mass sensor (120; 220) is attached to an outer wall (111) of the sensor housing (110) such that the sensor element (120.2; 220.2) faces away from the outer wall (111).

6. Sensor device (100; 200) according to claim 5, in which
the outer wall (111) is formed by a plate (111) spaced from a first outer wall (112) of the sensor housing (110).

7. Sensor device (100; 200) according to claim 5 or 6, in which
the black plate or black standard sensor (130) is attached or attachable to the outer wall (111) of the sensor housing (110).

8. Use of a sensor device (100; 200) according to one of the preceding claims in a device (10) for weathering or lightfastness testing of samples.

## Revendications

1. Dispositif de détection (100 ; 200) pour un appareil (10) destiné à tester la résistance aux intempéries ou la solidité à la lumière d'échantillons, comprenant :
- un boîtier de capteur (110),
et
- un capteur de tableau noir ou de standard de noir (130) monté sur le boîtier de capteur (110),
d'où il résulte que
- le dispositif de détection comprend un capteur de masse d'air (120 ; 220) qui comporte un élément de détection (120.2 ; 220.2) et qui est fixé au boîtier de capteur (110),
et en ce que
- le capteur de masse d'air (120 ; 220) est espacé du capteur de tableau noir ou de standard noir dans une plage comprise entre 0,5 mm et 10 mm.

2. Dispositif de détection (200) selon la revendication 1, dans lequel
le capteur d'air massique (220) est conçu comme un capteur à fil chaud et l'élément de détection (220.2) est donné par un fil.

3. Dispositif de détection (100) selon la revendication 1 ou 2, dans lequel
le capteur de masse d'air (120) est conçu selon le principe d'un capteur à fil chaud et l'élément de détection (120.2) est donné par une couche ou un film métallique.

4. Dispositif de capteur (100) selon la revendication 3, dans lequel
une couche métallique de platine, de nickel ou de tungstène est utilisée, laquelle est appliquée sur un substrat (120.1).

5. Dispositif de détection (100 ; 200) selon l'une des revendications précédentes, dans lequel
le capteur de masse d'air (120 ; 220) est fixé à une paroi extérieure (111) du boîtier de capteur (110) de telle sorte que l'élément de capteur (120.2 ; 220.2) est détourné de la paroi extérieure (111).

6. Dispositif de détection (100 ; 200) selon la revendication 5, dans lequel
la paroi extérieure (111) est formée par une plaque (111) espacée d'une première paroi extérieure (112) du boîtier de capteur (110).

7. Dispositif de détection (100 ; 200) selon la revendication 5 ou 6, dans lequel
le capteur de tableau noir ou de standard noir (130) est fixé ou peut être fixé à la paroi extérieure (111) du boîtier de capteur (110).

8. Utilisation d'un dispositif de détection (100 ; 200) selon l'une des revendications précédentes dans un dispositif (10) pour l'exposition aux intempéries ou le contrôle de la solidité à la lumière d'échantillons.
